(19) Europäisches Patentamt
European Patent Office
Office européen des brevets

(11) **EP 4 453 903 B1**

(12) **EUROPÄISCHE PATENTSCHRIFT**

(45) Veröffentlichungstag und Bekanntmachung des Hinweises auf die Patenterteilung:
**13.08.2025   Patentblatt 2025/33**

(21) Anmeldenummer: **22835061.7**

(22) Anmeldetag: **15.12.2022**

(51) Internationale Patentklassifikation (IPC):
*G06V 10/774* *(2022.01)*      *G06V 10/778* *(2022.01)*
*G06V 20/68* *(2022.01)*       *G06N 3/084* *(2023.01)*
*G06V 10/24* *(2022.01)*       *G06K 7/10* *(2006.01)*
*G06N 3/09* *(2023.01)*        *G06V 10/82* *(2022.01)*
*G06N 3/0464* *(2023.01)*      *G06K 7/14* *(2006.01)*

(52) Gemeinsame Patentklassifikation (CPC):
**G06V 20/68; G06K 7/10861; G06K 7/1482;
G06N 3/0464; G06N 3/084; G06N 3/09;
G06V 10/243; G06V 10/774; G06V 10/778;
G06V 10/82;** G06N 3/045; G06N 3/0475;
G06N 3/092

(86) Internationale Anmeldenummer:
**PCT/EP2022/086140**

(87) Internationale Veröffentlichungsnummer:
**WO 2023/117688 (29.06.2023 Gazette 2023/26)**

(54) **AUSLESEN VON OPTISCH LESBAREN CODES**

READING OF OPTICALLY READABLE CODES

LECTURE DE CODES À LECTURE OPTIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **22.12.2021   EP 21216812
22.12.2021   EP 21216923
10.02.2022   EP 22156217**

(43) Veröffentlichungstag der Anmeldung:
**30.10.2024   Patentblatt 2024/44**

(73) Patentinhaber: **Bayer Aktiengesellschaft
51373 Leverkusen (DE)**

(72) Erfinder:
• **SCHAEFER, Dirk
51373 Leverkusen (DE)**
• **HOETTER, Benjamin
51491 Overath (DE)**
• **FISCHER, Gregor
51491 Overath (DE)**
• **RUELBERG, Klaus
51491 Overath (DE)**

(74) Vertreter: **BIP Patents
c/o Bayer Intellectual Property GmbH
Alfred-Nobel-Straße 50
40789 Monheim am Rhein (DE)**

(56) Entgegenhaltungen:
EP-A1- 3 640 901           WO-A1-2020/119301
GB-A- 2 585 938            US-A1- 2012 211 555
US-A1- 2020 175 317        US-A1- 2020 334 650

• PU HAITAO ET AL: "Quick response barcode deblurring via doubly convolutional neural network", MULTIMEDIA TOOLS AND APPLICATIONS, vol. 78, no. 1, 10 March 2018 (2018-03-10), KLUWER ACADEMIC PUBLISHERS, BOSTON, US, pages 897 - 912, XP036695251, ISSN: 1380-7501, [retrieved on 20180310], DOI: 10.1007/S11042-018-5802-2

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung befasst sich mit dem technischen Gebiet der Transformation einer Bildaufnahme eines optisch lesbaren Codes, der in eine Oberfläche eines Gegenstands eingebracht ist, und dem Auslesen (Dekodieren) der Codes,

H. Pu et al. offenbaren ein Verfahren zum Schärfen von QR-codes: Quick response barcode deblurring via doubly convolutional neural network, Multimed Tools Appl (2019) 78:897-912.

Die Verfolgung von Gütern und Waren spielt in vielen Bereichen der Wirtschaft eine wichtige Rolle. Waren und Güter bzw. deren Verpackungen und/oder Behälter werden mit einer eindeutigen Kennung (z.B. einer Seriennummer) versehen (Serialisierung), um sie entlang ihrer Lieferkette verfolgen und Wareneingänge und -ausgänge maschinell erfassen zu können (siehe z.B. US10,140,492B1, CN112434544A).

In vielen Fällen ist die Kennung in einer optisch lesbaren Form, z.B. in Form eines Strichcodes (z.B. EAN-8-Barcode) oder eines Matrixcodes (z.B. QR-Code) auf den Waren und Gütern bzw. deren Verpackungen und/oder Behältern aufgebracht. Hinter dem Strich- oder Matrixcode verbirgt sich oft eine Seriennummer, die üblicherweise Auskunft über Art der Ware oder des Gutes und über die Herkunft liefert.

Bei manchen pharmazeutischen Produkten ist sogar eine individuelle Kennzeichnung von Einzelpackungen erforderlich. Gemäß Art. 54a Abs. 1 der durch die sog. EU-Fälschungsschutzrichtlinie 2011/62/EU (FMD) geänderten Richtlinie 2001/83/EG sind zumindest verschreibungspflichtige Arzneimittel mit einem individuellen Erkennungsmerkmal (engl.: *Unique Identifier*) zu kennzeichnen, das insbesondere eine Überprüfung der Echtheit und die Identifizierung von Einzelpackungen ermöglicht.

Pflanzliche und tierische Erzeugnisse werden üblicherweise lediglich mit einem Seriencode versehen. Bei pflanzlichen und tierischen Erzeugnissen wird eine Kennzeichnung üblicherweise auf eine Verpackung und/oder einen Behälter zum Beispiel in Form von Aufklebern oder Aufdrucken aufgebracht bzw. angebracht.

In manchen Fällen werden Kennungen auch direkt auf pflanzliche oder tierische Erzeugnisse aufgebracht. Eier werden beispielsweise in der Europäischen Union mit einem Erzeugercode versehen, aus dem die Haltungsform des Huhns, das Land, aus dem das Ei stammt, und der Betrieb, aus dem das Ei stammt, abgeleitet werden kann. Zunehmend werden auch die Schale von Obst- und Gemüseeinheiten mit einer Kennzeichnung versehen (siehe z.B.: E. Etxeberria et al: Anatomical and Morphological Characteristics of Laser Etching Depressions for Fruit Labeling, 2006, HortTechnology. 16, 10.21273/HORTTECH.16.3.0527).

Verbraucher zeigen ein zunehmendes Interesse an der Herkunft und der Lieferkette von pflanzlichen und tierischen Erzeugnissen. Sie wollen beispielsweise wissen, woher das jeweilige Erzeugnis stammt, ob und wie es behandelt wurde (z.B. mit Pflanzenschutzmitteln), wie lange der Transport gedauert hat, welche Bedingungen während des Transports geherrscht haben und/oder dergleichen.

In EP3896629A1 wird vorgeschlagen, pflanzliche und tierische Erzeugnisse mit einer individuellen Kennung in Form eines optisch lesbaren Codes zu versehen. Der Code kann von einem Verbraucher beispielsweise mittels der Kamera seines Smartphones gelesen werden. Anhand des ausgelesenen Codes können dem Verbraucher verschiedene Informationen zu dem pflanzlichen oder tierischen Erzeugnis angezeigt werden. EP3896629A1 schlägt vor, den optisch lesbaren Code beispielsweise mittels eines Lasers in eine Oberfläche des pflanzlichen oder tierischen Erzeugnisses einzubringen. Ein in die Oberfläche eines pflanzlichen oder tierischen Erzeugnisses eingebrachter optischer Code weist einen geringeren Kontrast gegenüber dem umliegenden Gewebe auf und ist damit schwieriger auszulesen als beispielsweise ein mit schwarzer Farbe auf weißen Hintergrund aufgebrachter optischer Code, wie er üblicherweise bei Aufklebern oder Anhängern vorliegt. Ferner weisen optische Codes auf unterschiedlichen Gegenständen ein unterschiedliches Erscheinungsbild auf. Werden optisch lesbare Codes mittels eines Lasers beispielsweise auf gekrümmte Oberflächen wie sie bei vielen Früchten und Gemüsesorten vorliegen, aufgebracht, kann es zu einer Verzerrung der Codes kommen, die ein Auslesen erschwert. Werden optisch lesbare Codes auf glatte Oberflächen aufgebracht, können beim Auslesen Reflexionen (z.B. durch Umgebungslicht) auf der Oberfläche auftreten, die ein Auslesen erschweren. Oberflächen von Früchten und Gemüsen können uneinheitlich sein, z.B. können Äpfel Stippen und Flecken aufweisen. Kartoffeln können Unebenheiten aufweisen. Solche Uneinheitlichkeiten und Unebenheiten können ein Auslesen von Codes erschweren.

Es stellt sich damit die Aufgabe, Mittel bereitzustellen, mit denen optisch lesbare Codes auf einer Vielzahl von verschiedenen Gegenständen, insbesondere auf einer Vielzahl von pflanzlichen und tierischen Erzeugnissen, von einem Verbraucher mit einfachen Mitteln, wie beispielweise einem Smartphone, zuverlässig ausgelesen werden können.

Diese Aufgabe wird durch die Gegenstände der unabhängigen Patentansprüche gelöst. Bevorzugte Ausführungsformen finden sich in den abhängigen Patentansprüchen, der vorliegenden Beschreibung und in den Zeichnungen.

Ein erster Gegenstand der vorliegenden Erfindung ist ein Verfahren zum Trainieren eines Modells des maschinellen Lernens, umfassend:

- Bereitstellen von Trainingsdaten, wobei die Trainingsdaten für jeden Gegenstand einer Vielzahl von Gegenständen i) mindestens eine Referenz-Bildaufnahme von einem optischen Code, der in eine Oberfläche des Gegenstands eingebracht ist, und ii) eine transformierte Referenz-Bildaufnahme von dem optischen Code umfassen, wobei für jeden Gegenstand die transformierte Referenz-Bildaufnahme durch Anwenden einer oder mehrerer Transformationen auf die mindestens eine Referenz-Bildaufnahme erzeugt wurde, wobei die eine oder mehreren Transformationen den Kontrast zwischen dem optisch lesbaren Code und dem umliegenden Teil der Oberfläche erhöhen und/oder Verzerrungen/Verzeichnungen reduzieren oder eliminieren und/oder Reflexionen reduzieren oder eliminieren, wobei die Gegenstände verschiedene Exemplare eines pflanzlichen oder tierischen Erzeugnisses sind,

- Bereitstellen eines Modells des maschinellen Lernens, wobei das Modell des maschinellen Lernens konfiguriert ist, auf Basis mindestens einer ersten Bildaufnahme und auf Basis von Modellparametern eine zweite Bildaufnahme zu erzeugen, wobei die zweite Bildaufnahme eine transformierte erste Bildaufnahme ist,

- Trainieren des Modells des maschinellen Lernens, wobei das Trainieren für jeden Gegenstand der Vielzahl von Gegenständen umfasst:

    o Eingeben der mindestens einen Referenz-Bildaufnahme in das Modell des maschinellen Lernens,

    o Empfangen einer vorhergesagten transformierten Referenz-Bildaufnahme von dem Modell des maschinellen Lernens,

    o Berechnen einer Abweichung zwischen der transformierten Referenz-Bildaufnahme und der vorhergesagten transformierten Referenz-Bildaufnahme,

    o Modifizieren der Modellparameter im Hinblick auf eine Reduzierung der Abweichung,

- Speichern und/oder Ausgeben des trainierten Modells des maschinellen Lernens und/oder Übermitteln des trainierten Modells des maschinellen Lernens an ein separates Computersystems und/oder Verwenden des trainierten Modells des maschinellen Lernens zur Erzeugung einer transformierten Bildaufnahme von mindestens einer neuen Bildaufnahme eines Gegenstands.

Ein weiterer Gegenstand der vorliegenden Erfindung ist ein computer-implementiertes Verfahren zum Dekodieren eines optisch lesbaren Codes, der in eine Oberfläche eines Gegenstands eingebracht ist:

- Empfangen einer Bildaufnahme von dem optisch lesbaren Code,

- Zuführen der Bildaufnahme einem trainierten Modell des maschinellen Lernens, wobei das trainierte Modell des maschinellen Lernens anhand von Trainingsdaten trainiert worden ist, wobei die Trainingsdaten für jeden Gegenstand einer Vielzahl von Gegenständen i) mindestens eine Referenz-Bildaufnahme von einem optischen Code, der in eine Oberfläche des Gegenstands eingebracht ist, und ii) eine transformierte Referenz-Bildaufnahme von dem optischen Code umfassen, wobei das Dekodieren des optischen Codes in der transformierten Referenz-Bildaufnahme weniger Dekodierfehler erzeugt als das Dekodieren des optischen Codes in der Referenz-Bildaufnahme,

    wobei für jeden Gegenstand die transformierte Referenz-Bildaufnahme durch Anwenden einer oder mehrerer Transformationen auf die mindestens eine Referenz-Bildaufnahme erzeugt wurde, wobei die eine oder mehreren Transformationen den Kontrast zwischen dem optisch lesbaren Code und dem umliegenden Teil der Oberfläche erhöhen und/oder Verzerrungen/Verzeichnungen reduzieren oder eliminieren und/oder Reflexionen reduzieren oder eliminieren, wobei die Gegenstände verschiedene Exemplare eines pflanzlichen oder tierischen Erzeugnisses sind,

    wobei das Trainieren für jeden Gegenstand der Vielzahl von Gegenständen umfasst:

    ◦ Eingeben der mindestens einen Referenz-Bildaufnahme in das Modell des maschinellen Lernens,

    o Empfangen einer vorhergesagten transformierten Referenz-Bildaufnahme von dem Modell des maschinellen Lernens,

    o Berechnen einer Abweichung zwischen der transformierten Referenz-Bildaufnahme und der vorhergesagten transformierten Referenz-Bildaufnahme,

o Modifizieren der Modellparameter im Hinblick auf eine Reduzierung der Abweichung,

- Empfangen einer transformierten Bildaufnahme von dem Modell des maschinellen Lernens,

- Dekodieren des in der transformierten Bildaufnahme abgebildeten optisch lesbaren Codes.

Ein weiterer Gegenstand der vorliegenden Erfindung ist ein System umfassend mindestens einen Prozessor, wobei der Prozessor konfiguriert ist

- eine Bildaufnahme von einem optisch lesbaren Code zu empfangen, wobei der optisch lesbare Code in eine Oberfläche eines Gegenstands eingebracht ist,

- die Bildaufnahme einem trainierten Modell des maschinellen Lernens zuzuführen, wobei das trainierte Modell des maschinellen Lernens anhand von Trainingsdaten trainiert worden ist, wobei die Trainingsdaten für jeden Gegenstand einer Vielzahl von Gegenständen i) mindestens eine Referenz-Bildaufnahme von einem optischen Code, der in eine Oberfläche des Gegenstands eingebracht ist, und ii) eine transformierte Referenz-Bildaufnahme von dem optischen Code umfassen, wobei das Dekodieren des optischen Codes in der transformierten Referenz-Bildaufnahme weniger Dekodierfehler erzeugt als das Dekodieren des optischen Codes in der Referenz-Bildaufnahme,

wobei für jeden Gegenstand die transformierte Referenz-Bildaufnahme durch Anwenden einer oder mehrerer Transformationen auf die mindestens eine Referenz-Bildaufnahme erzeugt wurde, wobei die eine oder mehreren Transformationen den Kontrast zwischen dem optisch lesbaren Code und dem umliegenden Teil der Oberfläche erhöhen und/oder Verzerrungen/Verzeichnungen reduzieren oder eliminieren und/oder Reflexionen reduzieren oder eliminieren, wobei die Gegenstände verschiedene Exemplare eines pflanzlichen oder tierischen Erzeugnisses sind,

wobei das Trainieren für jeden Gegenstand der Vielzahl von Gegenständen umfasst:

o Eingeben der mindestens einen Referenz-Bildaufnahme in das Modell des maschinellen Lernens,

o Empfangen einer vorhergesagten transformierten Referenz-Bildaufnahme von dem Modell des maschinellen Lernens,

o Berechnen einer Abweichung zwischen der transformierten Referenz-Bildaufnahme und der vorhergesagten transformierten Referenz-Bildaufnahme,

o Modifizieren der Modellparameter im Hinblick auf eine Reduzierung der Abweichung,

- von dem Modell des maschinellen Lernens eine transformierte Bildaufnahme zu empfangen,

- den in der transformierten Bildaufnahme abgebildeten optisch lesbaren Code zu dekodieren.

Ein weiterer Gegenstand der vorliegenden Erfindung ist ein Computerprogrammprodukt umfassend einen Datenträger, auf dem ein Computerprogramm gespeichert ist, wobei das Computerprogramm in einen Arbeitsspeicher eines Computers geladen werden kann und dort den Computer dazu veranlasst, folgende Schritte ausführen:

- Empfangen einer Bildaufnahme von dem optisch lesbaren Code,

- Zuführen der Bildaufnahme einem trainierten Modell des maschinellen Lernens, wobei das trainierte Modell des maschinellen Lernens anhand von Trainingsdaten trainiert worden ist, wobei die Trainingsdaten für jeden Gegenstand einer Vielzahl von Gegenständen i) mindestens eine Referenz-Bildaufnahme von einem optischen Code, der in eine Oberfläche des Gegenstands eingebracht ist, und ii) eine transformierte Referenz-Bildaufnahme von dem optischen Code umfassen, wobei das Dekodieren des optischen Codes in der transformierten Referenz-Bildaufnahme weniger Dekodierfehler erzeugt als das Dekodieren des optischen Codes in der Referenz-Bildaufnahme,

wobei für jeden Gegenstand die transformierte Referenz-Bildaufnahme durch Anwenden einer oder mehrerer Transformationen auf die mindestens eine Referenz-Bildaufnahme erzeugt wurde, wobei die eine oder mehreren Transformationen den Kontrast zwischen dem optisch lesbaren Code und dem umliegenden Teil der Oberfläche erhöhen und/oder Verzerrungen/Verzeichnungen reduzieren oder eliminieren und/oder Reflexionen reduzieren oder eliminieren, wobei die Gegenstände verschiedene Exemplare eines pflanzlichen oder tierischen Erzeugnisses sind,

wobei das Trainieren für jeden Gegenstand der Vielzahl von Gegenständen umfasst:

◦ Eingeben der mindestens einen Referenz-Bildaufnahme in das Modell des maschinellen Lernens,

◦ Empfangen einer vorhergesagten transformierten Referenz-Bildaufnahme von dem Modell des maschinellen Lernens,

◦ Berechnen einer Abweichung zwischen der transformierten Referenz-Bildaufnahme und der vorhergesagten transformierten Referenz-Bildaufnahme,

◦ Modifizieren der Modellparameter im Hinblick auf eine Reduzierung der Abweichung,

- Empfangen einer transformierten Bildaufnahme von dem Modell des maschinellen Lernens,

- Dekodieren des in der transformierten Bildaufnahme abgebildeten optisch lesbaren Codes.

Die Erfindung wird nachstehend näher erläutert, ohne zwischen den Erfindungsgegenständen (Trainingsverfahren, Dekodierverfahren, System, Computerprogrammprodukt) zu unterscheiden. Die nachfolgenden Erläuterungen sollen vielmehr für alle Erfindungsgegenstände in analoger Weise gelten, unabhängig davon, in welchem Kontext (Trainingsverfahren, Dekodierverfahren, System, Computerprogrammprodukt) sie erfolgen.

Wenn in der vorliegenden Beschreibung oder in den Patentansprüchen Schritte in einer Reihenfolge genannt sind, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Die vorliegende Erfindung stellt Mittel zum Auslesen (Dekodieren) eines optisch lesbaren Codes bereit. Die Begriffe "Auslesen" und "Dekodieren" werden in dieser Beschreibung synonym verwendet. Unter dem Begriff "optisch lesbarer Code" werden Markierungen verstanden, die mit Hilfe einer Kamera erfasst und beispielsweise in alphanumerische Zeichen umgewandelt werden können.

Beispiele für optisch lesbare Codes sind Strichcodes (Barcodes), gestapelte Codes, Composite Codes, Matrixcodes und 3D Codes. Auch alphanumerische Zeichen, die mittels automatisierter Texterkennung (engl. *optical character recognition,* Abkürzung: OCR) erfasst (interpretiert, gelesen) und digitalisiert werden können, fallen unter den Begriff optisch lesbare Codes.

Optisch lesbare Codes gehören zu den maschinenlesbaren Codes, d.h. zu Codes, die mittels einer Maschine erfasst und verarbeitet werden können. Im Fall der optisch lesbaren Codes umfasst eine solche "Maschine" üblicherweise eine Kamera.

Eine Kamera umfasst üblicherweise einen Bildsensor und optische Elemente. Der Bildsensor ist eine Vorrichtung zur Aufnahme von zweidimensionalen Abbildern aus Licht auf elektrischem Weg. Üblicherweise handelt es sich um einen halbleiterbasierten Bildsensor wie beispielsweise ein CCD-(CCD = *charge-coupled device*) oder CMOS-Sensor (CMOS = *complementary metal-oxidesemiconductor*). Die optischen Elemente (Linsen, Blenden und dergleichen) dienen einer möglichst scharfen Abbildung des Gegenstands (Objekts), von dem eine digitale Bildaufnahme erzeugt werden soll, auf dem Bildsensor.

Optisch lesbare Codes haben den Vorteil, dass sie von vielen Verbrauchern mit einfachen Mitteln ausgelesen werden können. So verfügen viele Verbraucher beispielsweise über ein Smartphone, das mit einer oder mehreren Kameras ausgestattet ist. Mittels einer solchen Kamera kann eine Abbildung des optisch lesbaren Codes auf dem Bildsensor erzeugt werden. Die Abbildung kann digitalisiert und von einem Computerprogramm, das auf dem Smartphone gespeichert ist, bearbeitet und/oder gespeichert werden. Ein solches Computerprogramm kann konfiguriert sein, den optisch lesbaren Code zu identifizieren und zu interpretieren, d.h. in eine andere Form zu übersetzen wie beispielsweise in eine Zahlenfolge, eine Folge von Buchstaben und/oder dergleichen, je nachdem, welche Information in Form des optisch lesbaren Codes vorliegt.

Der optisch lesbare Code ist in eine Oberfläche eines Gegenstands eingebracht. Ein solcher Gegenstand ist ein realer, körperlicher, fassbarer Gegenstand. Bei einem solchen Gegenstand kann es sich um einen natürlichen Gegenstand oder um einen industriell hergestellten Gegenstand handelt. Beispiele für Gegenstände im Sinne der vorliegenden Erfindung sind: Werkzeuge, Maschinenbauteile, Platinen, Chips, Behälter, Verpackungen, Schmuck, Designobjekte, Kunstobjekte, Arzneimittel (z.B. in Form von Tabletten), Arzneimittelverpackungen sowie pflanzliche und tierische Erzeugnisse.

In einer bevorzugten Ausführungsform der vorliegenden Erfindung die nicht Teil der beanspruchten Erfindung ist, handelt es sich bei dem Gegenstand um ein Arzneimittel (z.B. in Form einer Tablette oder einer Kapsel) oder um eine Arzneimittelverpackung.

In einer weiteren bevorzugten Ausführungsform der vorliegenden Erfindung, die nicht Teil der beanspruchten Erfindung ist, handelt es sich bei dem Gegenstand um ein industriell hergestelltes Erzeugnis wie beispielsweise ein Bauteil für eine Maschine. Gemäß der beanspruchten Ausführungsform der Erfindung ist der Gegenstand ein pflanzliches oder tierisches Erzeugnis.

Ein pflanzliches Erzeugnis ist eine einzelne Pflanze oder ein Teil einer Pflanze (z.B. eine Frucht) oder eine Gruppe von Pflanzen oder eine Gruppe von Teilen einer Pflanze. Ein tierisches Erzeugnis ist ein Tier oder ein Teil eines Tieres oder eine Gruppe von Tieren oder eine Gruppe von Teilen eines Tieres oder ein Gegenstand, der von einem Tier hervorgebracht worden ist (wie z.B. ein Hühnerei). Auch industriell verarbeitete Erzeugnisse, wie beispielsweise Käse und Wurstwaren sollen unter den Begriff pflanzliches oder tierisches Erzeugnis fallen.

Üblicherweise handelt es sich bei dem pflanzlichen oder tierischen Erzeugnis um einen Teil einer Pflanze oder eines Tieres, der zum Verzehr durch einen Menschen oder ein Tier geeignet und/oder gedacht ist.

Vorzugsweise handelt es sich bei dem pflanzlichen Erzeugnis zumindest um einen Teil einer Kulturpflanze. Unter dem Begriff "Kulturpflanze" wird eine Pflanze verstanden, die durch das Eingreifen der Menschen zielgerichtet als Nutzpflanze angebaut wird. In einer bevorzugten Ausführungsform handelt es sich bei der Kulturpflanze um eine Obstpflanze oder eine Gemüsepflanze. Auch wenn Pilze biologisch nicht zu den Pflanzen zählen, sollen auch Pilze, insbesondere die Fruchtkörper von Pilzen, unter den Begriff pflanzliches Erzeugnis fallen.

Vorzugsweise handelt es sich bei der Kulturpflanze um eine der in der folgenden Enzyklopädie aufgeführten Pflanzen: Christopher Cumo: Encyclopedia of Cultivated Plants: From Acacia to Zinnia, Band 1 bis 3, ABC-CLIO, 2013, ISBN 9781598847758.

Ein pflanzliches oder tierisches Erzeugnis kann beispielsweise ein Apfel, eine Birne, eine Zitrone, eine Orange, eine Mandarine, eine Limone, eine Grapefruit, eine Kiwi, eine Banane, ein Pfirsich, eine Pflaume, eine Mirabelle, eine Aprikose, eine Tomate, ein Kohl (ein Blumenkohl, ein Weißkohl, ein Rotkohl, ein Grünkohl, Rosenkohl oder dergleichen), eine Melone, ein Kürbis, eine Gurke, eine Paprika, eine Zucchini, eine Aubergine, eine Kartoffel, eine Süßkartoffel, eine Lauchstange, Sellerie, ein Kohlrabi, ein Rettich, eine Mohrrübe, eine Pastinake, eine Schwarzwurzel, ein Spargel, eine Zuckerrübe, Rhabarber, eine Ingwerwurzel, eine Kokosnuss, eine Paranuss, eine Walnuss, eine Haselnuss, eine Esskastanie, ein Ei, ein Fisch, ein Stück Fleisch, ein Stück Käse, eine Wurst und/oder dergleichen sein.

Der optisch lesbare Code ist in eine Oberfläche des Gegenstands eingebracht. Das bedeutet, dass der optisch lesbare Code nicht in Form eines Anhängers an den Gegenstand angebracht ist und auch nicht in Form eines Aufklebers auf den Gegenstand aufgebracht ist. Stattdessen wurde eine Oberfläche des Gegenstands so verändert, dass die Oberfläche selbst den optisch lesbaren Code trägt.

Bei pflanzlichen Erzeugnissen und Eiern kann es sich bei der Oberfläche beispielsweise um die Schale handeln.

Der optisch lesbare Code kann in den Gegenstand eingraviert, eingeätzt, eingebrannt, eingeprägt und/oder auf sonstige Weise in eine Oberfläche des Gegenstands eingebracht sein. Vorzugsweise ist der optisch lesbare Code mittels eines Lasers in die Oberfläche des Gegenstands (zum Beispiel in die Schale bei einem Obst oder einem Gemüse) eingebracht. Dabei kann der Laser Farbstoffmoleküle in der Oberfläche des Gegenstands verändern (z.B. ausbleichen und/oder zerstören) und/oder lokal zu Verbrennungen und/oder Zerstörungen und/oder chemischen und/oder physikalischen Veränderungen des Gewebes führen (z.B. Verdampfen von Wasser, Denaturieren von Eiweiß und/oder ähnliches), so dass ein Kontrast zum umliegenden (nicht durch den Laser veränderten) Teil der Oberfläche entsteht.

Der optisch lesbare Code kann auch mittels eines Wasserstrahls oder Sandstrahls in eine Oberfläche des Gegenstands eingebracht sein.

Der optische lesbare Code kann auch mechanisch durch Ritzen, Stechen, Scheiden, Raspeln, Schaben, Stempeln und/oder dergleichen in eine Oberfläche des Gegenstands eingebracht sein.

Details zur Kennzeichnung von Gegenständen, insbesondere von pflanzlichen oder tierischen Erzeugnissen sind dem Stand der Technik zu entnehmen (siehe zum Beispiel EP2281468A1, WO2015/117438A1, WO2015/117541A1, WO2016/118962A1, WO2016/118973A1, DE102005019008A, WO2007/130968A2, US5660747, EP1737306A2, US10481589, US20080124433).

Vorzugsweise ist der optisch lesbare Code mit einem Kohlenstoffdioxidlaser ($CO_2$-Laser) in die Oberfläche des Gegenstands eingebracht worden.

Das Einbringen eines optisch lesbaren Codes in eine Oberfläche eines Gegenstands führt üblicherweise zu einer Markierung, die einen geringeren Kontrast aufweist als beispielsweise ein optisch lesbarer Code in Form eines schwarzen oder farbigen Aufdrucks auf einem weißen Aufkleber. Durch die Möglichkeit der individuellen Gestaltung des Aufklebers kann der Kontrast optimiert werden; beispielsweise weist eine schwarze Markierung (z.B. ein schwarzer Strichcode oder ein schwarzer Matrixcode) auf einem weißen Untergrund einen sehr hohen Kontrast auf. Solche hohen Kontraste werden durch das Einbringen von optisch lesbaren Codes in eine Oberfläche eines Gegenstands, insbesondere bei pflanzlichen oder tierischen Erzeugnissen und bei Arzneimitteln üblicherweise nicht erreicht. Dies kann zu Schwierigkeiten beim Auslesen der Codes führen. Zudem haben optisch lesbare Codes, die beispielsweise mittels eines Lasers in eine Oberfläche eines Gegenstands eingebacht werden, für verschiedene Gegenstände ein unterschiedliches Erscheinungsbild. Mit anderen Worten: optisch lesbare Codes, die beispielsweise in einen Apfel eingebracht werden, sehen üblicherweise anders aus als optisch lesbare Codes, die in eine Banane, eine Tomate, einen Kürbis oder in eine Kartoffel eingebracht werden. Auch die jeweilige Sorte einer Frucht kann einen Einfluss auf das Erscheinungsbild des optisch lesbaren Codes haben: optisch lesbare Codes in einem Apfel der Sorte "Granny Smith" sehen anders aus als optisch lesbare Codes in einem Apfel der Sorte "Pink Lady". Auch die Struktur der Oberfläche eines pflanzlichen oder tierischen Erzeugnisses kann einen Einfluss auf das Erscheinungsbild eines optisch lesbaren Codes haben: die vergleichsweise raue Oberflächenstruktur einer Kiwi kann das Auslesen eines optisch lesbaren Codes genauso erschweren wie Unebenheiten und Flecken in der Schale von Kartoffeln und Äpfeln. Üblicherweise weisen die Oberflächen von Früchten und Gemüsen Krümmungen auf. Wird ein optischer Code in eine gekrümmte Oberfläche eingebracht, kann es zu einer Verzerrung des Codes kommen; der Code kann beispielsweise eine kissenförmige oder tonnenförmige Verzeichnung aufweisen. Solche Verzerrungen/Verzeichnungen können das Dekodieren von Codes erschweren. Das Ausmaß einer Verzeichnung hängt dabei üblicherweise vom Grad der Krümmung ab. Wird ein optisch lesbarer Code mit einer Größe von 2 cm x 2 cm in einen Apfel eingebracht, ist die Verzeichnung/Verzerrung größer, als wenn derselbe Code in eine Melone eingebracht wird. Auf annähernd kugelförmigen Erzeugnissen (z.B. Apfel, Tomate, Melone) ergeben sich zudem andere Verzerrungen/Verzeichnungen als auf annährend zylinderförmigen Erzeugnissen (z.B. Gurken). Glatte Oberflächen (wie beispielsweise im Fall von Äpfeln) erzeugen mehr Reflexionen (z.B. durch Umgebungslicht) als raue Oberflächen (wie beispielsweise im Fall einer Kiwi).

Die genannten Eigenschaften des Gegenstands (Unebenheiten, Uneinheitlichkeiten, Flecken, gekrümmte Flächen, glatte (spiegelnde) Flächen, Farbgebung, Textur, Oberflächenrauigkeit und/oder dergleichen) werden in dieser Beschreibung auch als Störfaktoren bezeichnet.

Erfindungsgemäß werden daher Bildaufnahmen von optisch lesbaren Codes, die in eine Oberfläche eines Gegenstands eingebracht sind, vor dem Auslesen (Dekodieren) der Codes einer Transformation oder mehreren Transformationen unterzogen. Eine solche Transformation wird den Kontrast zwischen dem optisch lesbaren Code und dem umliegenden Teil der Oberfläche (den Teil der Oberfläche, die keinen Code trägt) erhöhen und/oder Verzerrungen/Verzeichnungen reduzieren oder eliminieren und/oder Reflexionen reduzieren oder eliminieren und/oder andere Artefakte, die auf den vorliegenden spezifischen Gegenstand zurückzuführen sind, reduzieren oder eliminieren.

Eine "Transformation" ist eine Funktion oder ein Operator, die/der ein Bild als Eingabe entgegennimmt und ein Bild als Ausgabe erzeugt. Die Transformation sorgt dafür, dass ein optisch lesbarer Code, der auf dem Eingabebild abgebildet ist, in dem Ausgabebild gegenüber seiner Umgebung einen höheren Kontrast aufweist als im Eingangsbild und/oder im Ausgabebild eine geringere Verzerrung/Verzeichnung aufweist als im Eingangsbild. Die Transformation sorgt dafür, dass Reflexionen von Licht auf der Oberfläche des Gegenstands im Ausgabebild gegenüber dem Eingabebild reduziert sind. Die Transformation sorgt dafür, dass Unebenheiten und/oder Uneinheitlichkeiten auf der Oberfläche des Gegenstands im Ausgabebild weniger deutlich in Erscheinung treten als im Eingabebild. Allgemein sorgt die Transformation dafür, dass das Ausgabebild weniger Dekodierfehler beim Dekodieren des abgebildeten optisch lesbaren Codes erzeugt als das Eingabebild. Ein solcher Dekodierfehler entsteht beispielsweise, wenn ein weißes Quadrat eines QR-Codes von dem Bildsensor als ein schwarzes Quadrat interpretiert wird.

Zunächst wird eine Bildaufnahme eines optisch lesbaren Codes, der in eine Oberfläche eines Gegenstands eingebracht ist, erzeugt. Es ist auch denkbar, dass mehrere Bildaufnahmen von dem optisch lesbaren Code erzeugt werden.

Unter dem Begriff "Bildaufnahme" wird vorzugsweise eine zweidimensionale Abbildung des Gegenstands oder eines Teils davon verstanden. Üblicherweise handelt es sich bei der Bildaufnahme um eine digitale Bildaufnahme. Der Begriff "digital" bedeutet, dass die Bildaufnahme von einer Maschine, in der Regel einem Computersystem, verarbeitet werden kann. Unter "Verarbeitung" werden die bekannten Verfahren zur elektronischen Datenverarbeitung (EDV) verstanden.

Digitale Bildaufnahmen können mit Computersystemen und Software verarbeitet, bearbeitet und reproduziert sowie in standardisierte Datenformate konvertiert werden, wie zum Beispiel JPEG, Portable Network Graphics (PNG) oder Scalable Vector Graphics (SVG). Digitale Bildaufnahmen können mit geeigneten Anzeigegeräten visualisiert werden, wie zum Beispiel mit Computermonitoren, Projektoren und/oder Druckern.

In einer digitalen Bildaufnahme werden Bildinhalte üblicherweise durch ganze Zahlen repräsentiert und gespeichert. In den meisten Fällen handelt es sich um zweidimensionale Bilder, die binär kodiert und gegebenenfalls komprimiert sein können. Bei den digitalen Bildaufnahmen handelt es sich üblicherweise um Rastergrafiken, bei denen die Bildinformation in einer gleichmäßigen Rasterung abgelegt ist. Rastergrafiken bestehen aus einer rasterförmigen Anordnung von so genannten Bildpunkten (Pixel) im Fall von zweidimensionalen Darstellungen oder Volumenelementen (Voxel) im Fall dreidimensionaler Darstellungen, denen jeweils eine Farbe bzw. ein Grauwert zugeordnet ist. Die Hauptmerkmale einer 2D-Rastergrafik sind daher die Bildgröße (Breite und Höhe gemessen in Pixeln, umgangssprachlich auch Bildauflösung genannt) sowie die Farbtiefe. Einem Bildpunkt einer digitalen Bilddatei ist üblicherweise eine Farbe zugeordnet. Die für einen Bildpunkt verwendete Kodierung der Farbe definiert sich unter anderem über den Farbraum und die Farbtiefe. Der einfachste Fall ist ein Binärbild, bei dem ein Bildpunkt einen Schwarzweiß-Wert speichert. Bei einem Bild, dessen Farbe über den so genannten RGB-Farbraum definiert ist (RGB steht für die Grundfarben Rot, Grün und Blau), besteht jeder Bildpunkt aus drei Farbwerten, einem Farbwert für die Farbe Rot, einem Farbwert für die Farbe Grün und einem Farbwert für die Farbe Blau. Die Farbe eines Bildpunktes ergibt durch die Überlagerung (additives Mischen) der drei Farbwerte. Der einzelne Farbwert ist z.B. in 256 unterscheidbare Stufen diskretisiert, die Tonwerte genannt werden und üblicherweise von 0 bis 255 reichen. Die Farbnuance "0" eines jeden Farbkanals ist die dunkelste. Haben alle drei Kanäle den Tonwert 0, erscheint der entsprechende Bildpunkt schwarz; haben alle drei Kanäle den Tonwert 255, erscheint der entsprechende Bildpunkt weiß. Bei der Ausführung der vorliegenden Erfindung werden digitale Bildaufnahmen bestimmten Operationen (Transformationen) unterworfen. Die Operationen betreffen dabei überwiegend die Bildpunkte als sogenannte räumliche Operatoren wie beispielsweise ein Kantendetektor, bzw. die Tonwerte der einzelnen Bildpunkte wie beispielsweise bei Farbraumtransformationen. Es gibt eine Vielzahl an möglichen digitalen Bildformaten und Farbkodierungen. Vereinfachend wird in dieser Beschreibung davon ausgegangen, dass die vorliegenden Bilder RGB-Rastergrafiken mit einer spezifischen Zahl an Bildpunkten sind. Diese Annahme soll jedoch in keiner Weise limitierend verstanden werden. Dem Fachmann der Bildverarbeitung ist klar, wie er die Lehre dieser Beschreibung auf Bilddateien, die in anderen Bildformaten vorliegen und/oder bei denen die Farbwerte anders kodiert sind, übertragen kann.

Bei der mindestens einen Bildaufnahme kann es sich auch um einen oder mehrere Ausschnitte aus einer Videosequenz handeln.

Die mindestens eine Bildaufnahme wird mit Hilfe einer Kamera oder mehreren Kameras erzeugt. Vorzugsweise wird die mindestens eine Bildaufnahme von einer oder mehreren Kameras eines Smartphones erzeugt.

Die Verwendung von mehreren Kameras, die einen Gegenstand aus unterschiedlichen Richtungen betrachten und Bildaufnahmen aus unterschiedlichen Blickrichtungen erzeugen, hat den Vorteil, dass Tiefeninformationen erfasst werden. Aus solchen Tiefeninformationen lassen sich beispielsweise Informationen über vorhandene Krümmungen des abgebildeten Gegenstands ableiten und/oder herauslesen.

Die mindestens eine Bildaufnahme zeigt den in die Oberfläche des Gegenstands eingebrachten optisch lesbaren Code.

Aus der Bildaufnahme wird in einem nächsten Schritt eine transformierte Bildaufnahme erzeugt. Es ist denkbar, dass mehrere Bildaufnahmen in die Erzeugung einer transformierten Bildaufnahme einfließen.

Eine transformierte Bildaufnahme ist eine Bildaufnahme, die einer oder mehreren Transformationen unterzogen wurde. Eine transformierte Bildaufnahme kann auch eine Bildaufnahme sein, bei der eine oder mehrere Bildaufnahmen und/oder eine oder mehrere transformierte Bildaufnahmen zu einer Bildaufnahme kombiniert wurden.

In der transformierten Bildaufnahme ist derselbe optische Code abgebildet wie in der einen oder den mehreren Bildaufnahmen, die zur Erzeugung der transformierten Bildaufnahme dienen. In der transformierten Bildaufnahme ist der optische Code jedoch deutlicher und/oder klarer und/oder mit weniger Verzerrungen und/oder mit weniger Verzeichnungen und/oder mit weniger Reflexionen und/oder mit weniger Eigenarten, die zu Dekodierfehlern führen können, abgebildet als in der oder den nicht-transformierten Bildaufnahmen.

Die transformierte Bildaufnahme wird erfindungsgemäß mit Hilfe eines trainierten Modells des maschinellen Lernens erzeugt.

Ein solches Modell kann in einem überwachten Lernverfahren trainiert werden, aus einer oder mehreren Bildaufnahmen eine transformierte Bildaufnahme zu erzeugen.

Ein "Modell des maschinellen Lernens" kann als eine computerimplementierte Datenverarbeitungsarchitektur verstanden werden. Das Modell kann Eingabedaten empfangen und Ausgabedaten auf der Grundlage dieser Eingabedaten und Modell-Parametern liefern. Das Modell kann durch Training eine Beziehung zwischen den Eingabedaten und den Ausgabedaten erlernen. Beim Training können die Modell-Parameter angepasst werden, um eine gewünschte Ausgabe für eine bestimmte Eingabe zu liefern.

Beim Trainieren eines solchen Modells werden dem Modell Trainingsdaten präsentiert, aus denen es lernen kann. Das trainierte Modell des maschinellen Lernens ist das Ergebnis des Trainingsprozesses. Die Trainingsdaten umfassen neben Eingabedaten die korrekten Ausgabedaten (Zieldaten), die das Modell auf Basis der Eingabedaten erzeugen soll. Beim Trainieren werden Muster erkannt, die die Eingabedaten auf die Zieldaten abbilden.

Im Trainingsprozess werden die Eingabedaten der Trainingsdaten in das Modell eingegeben, und das Modell erzeugt Ausgabedaten. Die Ausgabedaten werden mit den Zieldaten (sogenannte *Ground Truth* Daten) verglichen. Modell-Parameter werden so verändert, dass die Abweichungen zwischen den Ausgabedaten und den Zieldaten auf ein (definiertes) Minimum reduziert werden.

Im Training kann eine Fehlerfunktion (engl.: *loss function*) verwendet werden, um die Vorhersagequalität des Modells zu bewerten. Die Fehlerfunktion kann so gewählt werden, dass sie eine erwünschte Beziehung zwischen Ausgabedaten und Zieldaten belohnt und/oder eine unerwünschte Beziehung zwischen Ausgabedaten und Zieldaten bestraft. Eine solche Beziehung kann z.B. eine Ähnlichkeit, eine Unähnlichkeit oder eine andere Beziehung sein.

Eine Fehlerfunktion kann verwendet werden, um einen Fehler (engl.: *loss*) für ein gegebenes Paar aus Ausgabedaten und Zieldaten zu berechnen. Das Ziel des Trainingsprozesses kann darin bestehen, die Parameter des maschinellen Lernmodells so zu verändern (anzupassen), dass der Fehler für alle Paare des Trainingsdatensatzes auf ein (definiertes) Minimum reduziert wird.

Eine Fehlerfunktion kann z.B. die Abweichung zwischen den Ausgabedaten des Modells für bestimmte Eingabedaten und den Zieldaten quantifizieren. Handelt es sich bei den Ausgabedaten und den Zieldaten beispielsweise um Zahlen, kann die Fehlerfunktion die absolute Differenz zwischen diesen Zahlen sein. In diesem Fall kann ein hoher absoluter Wert der Fehlerfunktion bedeuten, dass ein oder mehrere Modell-Parameter in hohem Maße geändert werden müssen.

Bei Ausgabedaten in Form von Vektoren können beispielsweise Differenzmetriken zwischen Vektoren wie der mittlere quadratische Fehler, ein Kosinusabstand, eine Norm des Differenzvektors wie ein euklidischer Abstand, ein Tschebyscheff-Abstand, eine Lp-Norm eines Differenzvektors, eine gewichtete Norm oder jede andere Art von Differenzmetrik zweier Vektoren als Fehlerfunktion gewählt werden.

Bei höherdimensionalen Ausgaben, wie z.B. zweidimensionalen, dreidimensionalen oder höherdimensionalen Ausgaben, kann z. B. eine elementweise Differenzmetrik verwendet werden. Alternativ oder zusätzlich können die Ausgabedaten vor der Berechnung eines Verlustwertes transformiert werden, z.B. in einen eindimensionalen Vektor.

Das Modell des maschinellen Lernens ist im vorliegenden Fall ein Modell, das konfiguriert ist, auf Basis einer oder mehreren ersten Bildaufnahmen eine zweite Bildaufnahme zu erzeugen.

Im vorliegenden Fall wird das Modell des maschinellen Lernens trainiert, aus einer oder mehreren Bildaufnahmen eine transformierte Bildaufnahme zu erzeugen. Das Training wird auf Basis von Trainingsdaten erfolgen. Die Trainingsdaten umfassen eine Vielzahl von Referenz-Bildaufnahmen und transformierten Referenz-Bildaufnahmen Der Begriff "Referenz-" wird in dieser Beschreibung verwendet, um die Daten, die zum Trainieren des Modells des maschinellen Lernens verwendet werden, von den Daten, die bei der Nutzung des trainierten Modells des maschinellen verwendet werden, zu unterscheiden. Der Begriff soll aber keine einschränkende Bedeutung haben. Der Begriff "Vielzahl" bedeutet vorzugsweise mehr als 100. Die Referenz-Bildaufnahmen zeigen üblicherweise optisch lesbare Codes, die in Oberflächen einer Vielzahl von unterschiedlichen Exemplaren eines Gegenstands eingebracht sind. Die transformierten Referenz-Bildaufnahmen zeigen dieselben optisch lesbaren Codes wie die nicht-transformierten Referebnz-Bildaufnahmen. Die transformierten Referenz-Bildaufnahmen können von einem oder mehreren Experten im Bereich der optischen Bildverarbeitung auf Basis der Referenz-Bildaufnahmen erzeugt worden sein. Der eine oder die mehreren Experten können eine oder mehrere Transformationen auf die Referenz-Bildaufnahmen anwenden, um die optisch lesbaren Codes deutlicher und/oder klarer und/oder mit weniger Verzerrungen und/oder mit weniger Verzeichnungen und/oder mit weniger Reflexionen und/oder mit weniger Eigenarten, die zu Dekodierfehlern führen können, erscheinen zu lassen als im Fall der nicht-transformierten Referenz-Bildaufnahmen. Der eine oder die mehreren Experten können mehrere Referenz-Bildaufnahmen, die denselben optisch lesbaren Code auf der Oberfläche desselben Gegenstands zeigen, miteinander kombinieren, um eine transformierte Referenz-Bildaufnahme zu erzeugen. Ziel der Transformationen und/oder Kombinationen ist es, transformierte Referenz-Bildaufnahmen zu erzeugen, die beim Auslesen der abgebildeten optischen Codes weniger Dekodierfehler erzeugen als die nicht-transformierten Referenz-Bildaufnahmen.

Der Dekodierfehler kann empirisch ermittelt werden. Er kann zum Beispiel der prozentuale Anteil von Codes, die nicht (korrekt) dekodiert werden konnten, sein. Wenn also beispielsweise von 100 Codes, die in 100 Referenz-Bildaufnahmen abgebildet sind, 10 nicht dekodiert werden konnten oder einen oder mehrere Lesefehler erzeugt haben, dann beträgt der prozentuale Anteil von Codes, die nicht korrekt dekodiert werden konnten, 10%. Von den 100 Referenz-Bildaufnahmen werden z.B. 100 transformierte Referenz-Bildaufnahmen von einem oder mehreren Experten der Bildbearbeitung erzeugt. Die in den transformierten Referenz-Bildaufnahmen abgebildeten Codes werden dekodiert. Wenn die Experten ihre Arbeit korrekt ausgeführt haben, sollten von den 100 Codes in den 100 transformierten Referenz-Bildaufnahmen mehr als 90, idealerweise alle 100 korrekt dekodiert werden.

Viele optisch lesbare Codes weisen Mittel zur Fehlerkorrektur auf. Der Dekodierfehler kann auch die Anzahl an korrigierten Bits in einem Code bedeuten.

Ein oder mehrere Experten der Bildverarbeitung können für die Referenz-Bildaufnahmen Transformationen festlegen, die zu einer Kontrasterhöhung des optisch lesbaren Codes gegenüber seiner Umgebung führen und/oder die zu einer Reduktion/Eliminierung von Verzerrungen/Verzeichnungen führen und/oder die Reflexionen reduzieren/eliminieren und/oder die andere Eigenarten, die zu Dekodierfehlern führen können, reduzieren/eliminieren. Die Transformationen können jeweils getestet werden; falls sie nicht zu dem gewünschten Erfolg führen, können sie verworfen, verfeinert, geändert und/oder durch weitere Transformationen erweitert werden

Beispiele für Transformationen sind: räumliche Tiefpassfilterung, räumliche Hochpassfilterung, Schärfen, Weichzeichnen (z.B. Gauß'sches Weichzeichnen), Unscharfmaskierung, Erosion, Medianfilter, Maximumfilter, Reduktion des Kontrastumfangs, Kantendetektion, Farbtiefe erniedrigen, Graustufenkonvertierung, Negativ erstellen, Farbkorrekturen (Farbbalance, Gammakorrektur, Sättigung), Farben-Ersetzung, Fourier-Transformation, Fourier-Tiefpassfilter, Fourier-Hochpassfilter, inverse Fourier-Transformation.

Einige Transformationen können durch Faltung der Rastergrafik mit einer oder mit mehreren Faltungsmatrizen (engl.: *convolution kernel*) durchgeführt werden. Dabei handelt es sich üblicherweise um quadratische Matrizen ungerader Abmessungen, die unterschiedliche Größen aufweisen können (zum Beispiel 3x3, 5x5, 9x9 und/oder dergleichen). Einige Transformationen können als lineares System dargestellt werden, wobei eine diskrete Faltung, eine lineare Operation, angewandt wird. Für diskrete zweidimensionale Funktionen (digitale Bilder) ergibt sich folgende Berechnungsformel für die diskrete Faltung:

$$I^*(x, y) = \sum_{i=1} \sum_{i=1} I(x - i + a, y - 1 + a)(k(i, j)$$

wobei $I^*(x, y)$ die Ergebnispixel der transformierten Bildaufnahme darstellen und $I$ die ursprüngliche Bildaufnahme, auf die die Transformation angewendet wird, ist. $a$ gibt die Koordinate des Mittelpunkts in der quadratischen Faltungsmatrix an und $k(i,j)$ ist ein Element der Faltungsmatrix. Bei 3x3-Faltungsmatrizen ist n=3 und a=2; bei 5x5-Matrizen ist $n$=5 und $a$=3.

Nachfolgend sind Transformationen und Sequenzen von Transformationen aufgeführt, die beispielsweise bei Äpfeln dazu führen, dass die transformierte Referenz-Bildaufnahme weniger Dekodierfehler erzeugt als die nicht-transformierte Referenz-Bildaufnahme:

- Farbtransformation in intensitätslineare RGB-Signale
- Farbtransformation der linearen RGB-Signale in z.B. einen Reflexkanal und/oder einen Beleuchtungskanal und mindestens zwei Farbkanäle zur Unterscheidung der codierten und uncodierten Oberflächenteile. Dazu werden die intensitätslinearen RGB-Farbsignale untereinander so linear kombiniert, dass eine bestmögliche Unterscheidung zwischen codierten und uncodierten Flächenteilen vorgenommen wird.
- Reflexkorrektur durch Subtraktion des Reflexkanals von den mindestens zwei Farbkanälen (additive Korrektur)
- Beleuchtungskorrektur durch Normierung der mindestens zwei Farbkanäle auf den Beleuchtungskanal (multiplikative Korrektur)
- Korrektur von Störungen in der Apfeloberfläche durch Detektion der Störungen und räumlicher Interpolation aus der Umgebung der Störstelle
- Unscharfmaskierung des beleuchtungs- und reflexkorrigierten Bildausschnitts mit einer Filtermaske in einer Ausdehnung, so dass räumliche Inhomogenitäten z.B. der Bildhelligkeit durch die gekrümmte Oberflächengestalt des Apfels gut ausgeglichen werden, und durch Anhebung der hochfrequenten Bildanteile der Bildkontrast zwischen codierten und uncodierten Flächenteilen verstärkt und optimiert wird.

Weitere Beispiele für Transformationen sind den zahlreichen Publikationen zum Thema digitale Bildverarbeitung zu entnehmen.

Ist eine Vielzahl von transformierten Referenz-Bildaufnahmen erzeugt, werden die Trainingsdaten zum Trainieren des Modells des maschinellen Lernens verwendet. Dabei werden dem Modell die (nicht-transformierten) Referenz-Bildaufnahmen als Eingabedaten zugeführt. Das Modell ist konfiguriert, aus einer oder mehreren Referenz-Bildaufnahmen eine Ausgabebildaufnahme zu erzeugen. Die Ausgabebildaufnahme wird mit einer transformierten Referenz-Bildaufnahme (den Zieldaten) verglichen. Die Abweichungen zwischen der Ausgabebildaufnahme und der transformierten Referenz-Bildaufnahme können mit einer Fehlerfunktion quantifiziert werden. Die ermittelten Fehlerwerte können verwendet werden, um Modellparameter des Modells des maschinellen Lernens so anzupassen, dass die Fehlerwerte reduziert werden. Erreichen die Fehlerwerte ein vor-definiertes Minimum, ist das Modell trainiert und kann zur Erzeugung von neuen transformierten Bildaufnahmen auf Basis von neuen Bildaufnahmen verwendet werden. Dabei bedeutet der Begriff "neu", dass die entsprechenden Bildaufnahmen nicht beim Trainieren des Modells verwendet wurden.

Das Modell des maschinellen Lernens kann beispielsweise ein künstliches neuronales Netzwerk sein oder ein solches umfassen.

Ein künstliches neuronales Netzwerk umfasst mindestens drei Schichten von Verarbeitungselementen: eine erste Schicht mit Eingangsneuronen (Knoten), eine N-te Schicht mit mindestens einem Ausgangsneuron (Knoten) und N-2 innere Schichten, wobei N eine natürliche Zahl und größer als 2 ist.

Die Eingangsneuronen dienen zum Empfangen einer oder mehreren Bildaufnahmen. Die Ausgangsneuronen dienen dazu, transformierte Bildaufnahmen auszugeben.

Die Verarbeitungselemente der Schichten zwischen den Eingangsneuronen und den Ausgangsneuronen sind in einem vorbestimmten Muster mit vorbestimmten Verbindungsgewichten miteinander verbunden.

Das Trainieren des neuronalen Netzes kann beispielsweise mittels eines Backpropagation-Verfahrens durchgeführt werden. Dabei wird für das Netz eine möglichst zuverlässige Abbildung von gegebenen Eingabedaten auf gegebene Ausgabedaten angestrebt. Die Qualität der Abbildung wird durch eine Fehlerfunktion beschrieben. Das Ziel ist die Minimierung der Fehlerfunktion. Das Einlernen eines künstlichen neuronalen Netzes erfolgt bei dem Backpropagation-Verfahren durch die Änderung der Verbindungsgewichte.

Im trainierten Zustand enthalten die Verbindungsgewichte zwischen den Verarbeitungselementen Informationen bezüglich der Beziehung zwischen Bildaufnahmen und transformierten Bildaufnahmen.

Eine Kreuzvalidierungsmethode kann verwendet werden, um die Daten in Trainings- und Validierungsdatensätze aufzuteilen. Der Trainingsdatensatz wird beim Backpropagation-Training der Netzwerkgewichte verwendet. Der Validierungsdatensatz wird verwendet, um zu überprüfen, mit welcher Vorhersagegenauigkeit sich das trainierte Netzwerk auf unbekannte Daten anwenden lässt.

In einer besonders bevorzugten Ausführungsform umfasst das Modell des maschinellen Lernens ein generatives, gegnerisches Netzwerk (engl.: *generative adversial network,* Abkürzung: GAN). Details zu diesen und anderen künstlichen neuronalen Netzen können dem Stand der Technik entnommen werden (siehe z.B.: M.-Y. Liu et al.: Generative Adversarial Networks for Image and Video Synthesis: Algorithms and Applications, arXiv:2008.02793; J. Henry et al.: Pix2Pix GAN for Image-to-Image Translation, DOI: 10.13140/RG.2.2.32286.66887).

Ist das Modell des maschinellen Lernens trainiert, kann es zur Erzeugung von neuen transformierten Bildaufnahmen auf Basis von neuen Bildaufnahmen verwendet werden.

Die Bildaufnahme (oder mehrere Bildaufnahmen) werden dem trainierten Modell zugeführt und das Modell erzeugt eine transformierte Bildaufnahme.

In der transformierten Bildaufnahme ist der optisch lesbare Code besser erkennbar und auslesbar als in der ursprünglichen (nicht-transformierten) Bildaufnahme (oder den ursprünglichen Bildaufnahmen im Fall von mehreren Bildaufnahmen).

In einem nächsten Schritt wird der optisch lesbare Code in der transformierten Bildaufnahme ausgelesen (dekodiert). Je nach verwendetem Code gibt es hier bereits existierende Verfahren zum Auslesen (Dekodieren) des jeweiligen Codes.

Der ausgelesene (dekodierte) Code kann Informationen zu dem Gegenstand, in dessen Oberfläche der Code eingebracht ist, enthalten.

In einer bevorzugten Ausführungsform umfasst der ausgelesene Code eine (individuelle) Kennung, anhand der ein Verbraucher weitere Informationen zu dem Gegenstand zum Beispiel aus einer Datenbank erhalten kann. Der ausgelesene Code und/oder mit dem ausgelesenen Code verknüpfte Informationen können ausgegeben, d.h. auf einem Bildschirm angezeigt, auf einem Drucker ausgedruckt und/oder in einem Datenspeicher gespeichert werden.

Weitere Informationen zu einer solchen (individuellen) Kennung und den Informationen, die zu dem mit der Kennung verknüpften Gegenstand gespeichert sein und einem Verbraucher angezeigt werden können, sind in der Patentanmeldung EP3896629A1 beschrieben.

Die Erfindung wird nachfolgend anhand von Zeichnungen näher erläutert, ohne die Erfindung auf die in den Zeichnungen gezeigten Merkmale und Merkmalskombinationen beschränken zu wollen.

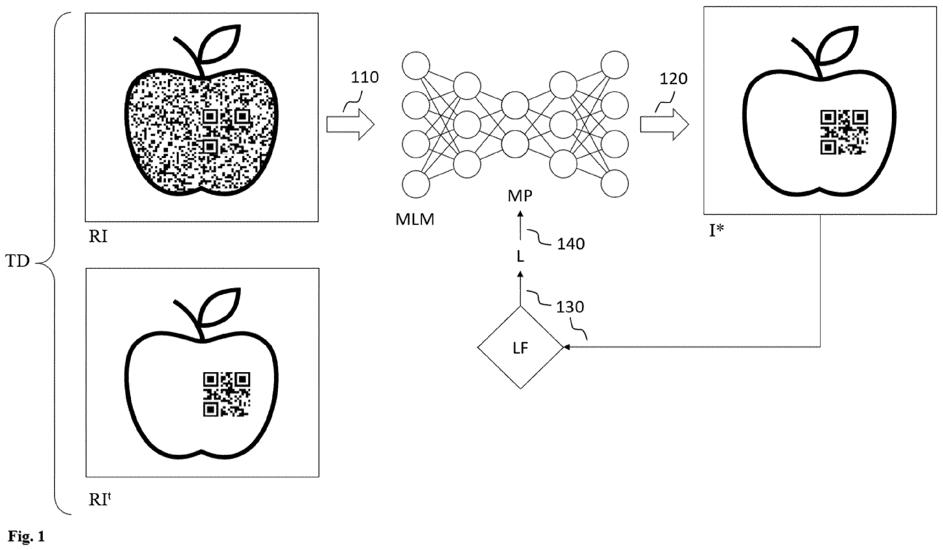

Fig. 1 zeigt beispielhaft und schematisch das Verfahren zum Trainieren des Modells des maschinellen Lernens.

Das Trainieren des Modells des maschinellen Lernens (MLM) erfolgt auf Basis von Trainingsdaten (TD). Die Trainingsdaten umfassen üblicherweise für jeden Gegenstand einer Vielzahl an Gegenständen i) mindestens eine Referenz-Bildaufnahme (RI) und ii) eine transformierte Referenz-Bildaufnahme (RI$^t$). In Fig. 1 ist nur ein Datensatz für einen Gegenstand gezeigt. Der Gegenstand ist im vorliegenden Beispiel ein Apfel. In eine Oberfläche des Gegenstands ist ein optischer Code eingebracht. Im vorliegenden Beispiel ist ein QR-Code in die Schale des Apfels eingebracht. Sowohl die transformierte Referenz-Bildaufnahme (RI$^t$) als auch die nicht-transformierte Bildaufnahme (RI) zeigen den in eine Oberfläche des Gegenstands eingebrachten optisch lesbaren Code. Die transformierte Referenz-Bildaufnahme (RI$^t$) kann von einem Experten auf Basis der nicht-transformierten Bildaufnahme (RI) erzeugt worden sein. Der Experte kann vor die Aufgabe gestellt worden sein, für die nicht-transformierte Bildaufnahme (RI) eine oder mehrere Transformationen zu bestimmen, die dafür sorgen, dass das Auslesen des optisch lesbaren Codes in der transformierten Referenz-Bildaufnahme (RI$^t$) weniger Dekodierfehler erzeugt als das Auslesen des Auslesen des optische lesbaren Codes in der nicht-transformierten Referenz-Bildaufnahme (RI).

Die Referenz-Bildaufnahme (RI) wird dem Modell des maschinellen Lernens (MLM) zugeführt (Schritt 110). Das Modell des maschinellen Lernens (MLM) ist konfiguriert, auf Basis der Referenz-Bildaufnahme (RI) und auf Basis von Modellparametern (MP) eine Ausgabebildaufnahme (I*) zu erzeugen (Schritt 120). Die Ausgabebildaufnahme (I*) ist eine vorhergesagte transformierte Referenz-Bildaufnahme. Die Ausgabebildaufnahme (I*) wird mit der transformierten Referenz-Bildaufnahme (RI$^t$) verglichen Mit Hilfe einer Fehlerfunktion (LF) kann ein Fehler (L) zwischen der Ausgabebildaufnahme (I*) und der transformierten Referenz-Bildaufnahme (RI$^t$) berechnet werden (Schritt 130), wobei der Fehler (L) eine Quantifizierung der Abweichung zwischen der Ausgabebildaufnahme (I*) und der transformierten Referenz-Bildaufnahme (RI$^t$) ist. Der Fehler (L) kann verwendet werden, um Modellparameter (MP) im Hinblick auf eine Reduzierung der Abweichung zu modifizieren. Dies kann in einem Optimierungsverfahren z.B. einem Gradientenverfahren erfolgen.

Das Modell des maschinellen Lernens (MLM) wird auf Basis einer Vielzahl an Referenz-Bildaufnahmen als Eingabedaten und transformierten Referenz-Bildaufnahmen als Zieldaten trainiert. Dadurch lernt das Modell solche Transformationen, die beim Auslesen zu weniger Dekodierfehlern führen.

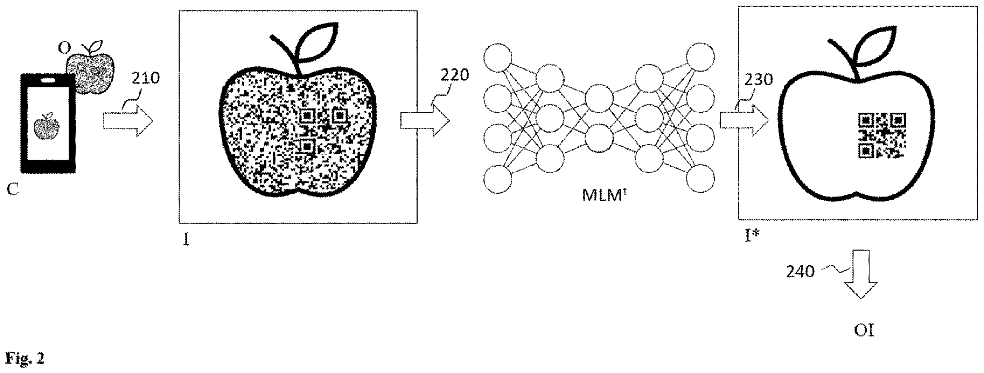

Fig. 2 zeigt schematisch und beispielhaft in Form eines Ablaufschemas das Auslesen eines optisch lesbaren Codes, der in eine Oberfläche eines Gegenstands eingebracht ist.

In einem ersten Schritt (210) wird mit Hilfe einer Kamera (C) eine digitale Bildaufnahme (I) des in die Oberfläche des Gegenstands (O) eingebrachten optisch lesbaren Codes erzeugt. In einem zweiten Schritt (220) wird die digitale Bildaufnahme (I) einem trainierten Modell des maschinellen Lernens (MLM$^t$) zugeführt. Das Modell des maschinellen Lernens (MLM$^t$) ist konfiguriert und trainiert, auf Basis der Bildaufnahme (I) eine transformierte Bildaufnahme (I*) zu erzeugen. Das Trainieren des Modells des maschinellen Lernens (MLM$^t$) kann wie in Bezug zu Fig. 1 beschrieben erfolgen. In einem dritten Schritt (230) liefert das Modell des maschinellen Lernens (MLM$^t$) die transformierte Bildaufnahme (I*), in der ein optisch lesbarer Code (in diesem Fall ein QR-Code), der in eine Oberfläche des Gegenstands (O) eingebracht ist, einen höheren Kontrast gegenüber seiner Umgebung aufweist und damit deutlicher erkennbar und leichter auszulesen ist als der optisch lesbare Code im Fall der nicht-transformierten Bildaufnahme (I). In einem vierten Schritt (140) wird der optisch lesbare Code ausgelesen und der ausgelesene Code (OI) bereitgestellt. Der ausgelesene Code (OI) kann angezeigt werden und/oder es können Informationen zu dem Gegenstand (O) anhand des ausgelesenen Codes (OI) z.B. aus einer Datenbank ausgelesen und bereitgestellt (z.B. übermittelt und angezeigt) werden.

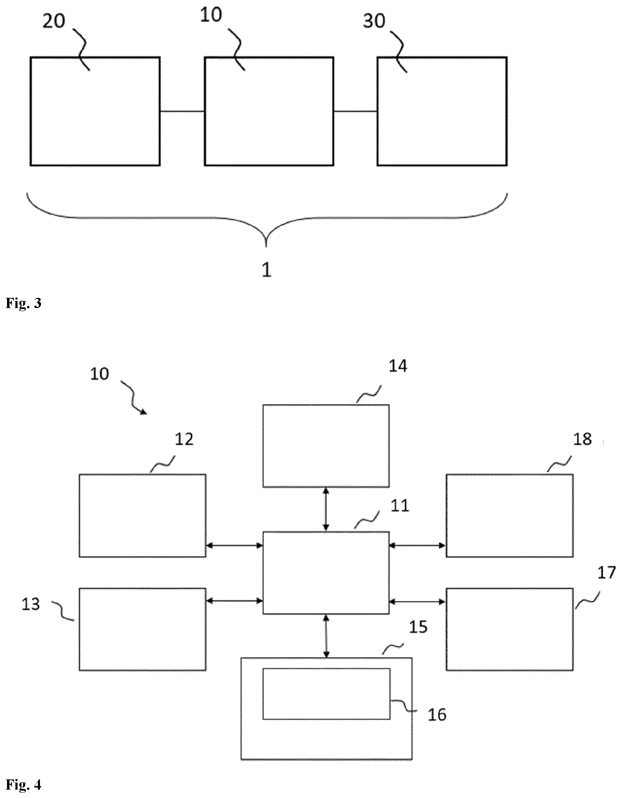

Fig. 3 zeigt beispielshaft und schematisch ein erfindungsgemäßes System.

Das System (1) umfasst ein Computersystem (10), eine Kamera (20) und einen oder mehrere Datenspeicher (30). Mit Hilfe der Kamera (20) können Bildaufnahmen von Gegenständen erzeugt werden. Die Kamera (20) ist mit dem Computersystem (10) verbunden, so dass die erzeugten Bildaufnahmen auf das Computersystem (10) übertragen werden können. Die Kamera (20) kann mit dem Computersystem (10) über eine Kabelverbindung und/oder über eine Funkverbindung verbunden sein. Auch eine Verbindung über ein oder mehrere Netzwerke ist denkbar. Denkbar ist ferner, dass die Kamera (20) ein integraler Bestandteil des Computersystems (10) ist, wie dies beispielsweise bei heutigen Smartphones und Tablet-Computern der Fall ist.

Das Computersystem (10) ist (beispielsweise mittels eines Computerprogramms) konfiguriert, eine oder mehrere Bildaufnahmen (von der Kamera oder aus einem Datenspeicher) zu empfangen, eine transformierte Bildaufnahme zu erzeugen, den optischen Code in der transformierten Bildaufnahme zu dekodieren und den dekodierten Code auszugeben und/oder Informationen bereitzustellen, die mit dem dekodierten Code verknüpft sind.

In dem Datenspeicher (30) können Bildaufnahmen, Modelle, Modellparameter, Computerprogramme und/oder andere/weitere Informationen gespeichert sein. Der Datenspeicher (30) kann mit dem Computersystem (10) über eine Kabelverbindung und/oder über eine Funkverbindung verbunden sein. Auch eine Verbindung über ein oder mehrere Netzwerke ist denkbar. Denkbar ist ferner, dass der Datenspeicher (30) ein integraler Bestandteil des Computersystems (10) ist. Denkbar ist ferner, dass mehrere Datenspeicher vorhanden sind.

Fig. 4 zeigt schematisch ein Computersystem (10). Ein solches Computersystem (10) kann ein oder mehrere ortsfeste oder tragbare elektronische Geräte umfassen. Das Computersystem (10) umfasst eine oder mehrere Komponenten, wie z.B. eine Verarbeitungseinheit (11), die mit einem Speicher (15) verbunden ist.

Die Verarbeitungseinheit (11) (engl.: *processing unit*) kann einen oder mehrere Prozessoren allein oder in Kombination mit einem oder mehreren Speichern umfassen. Bei der Verarbeitungseinheit (11) kann es sich um gewöhnliche Computerhardware handeln, die in der Lage ist, Informationen wie z.B. digitale Bildaufnahmen, Computerprogramme und/oder andere digitale Informationen zu verarbeiten. Die Verarbeitungseinheit (11) besteht üblicherweise aus einer Anordnung elektronischer Schaltungen, von denen einige als integrierter Schaltkreis oder als mehrere miteinander verbundene integrierte Schaltkreise (ein integrierter Schaltkreis wird manchmal auch als "Chip" bezeichnet) ausgeführt sein können. Die Verarbeitungseinheit (11) kann konfiguriert sein, Computerprogramme auszuführen, die in einem Arbeitsspeicher der Verarbeitungseinheit (11) oder im Speicher (15) desselben oder eines anderen Computersystems gespeichert sein können.

Der Speicher (15) kann eine gewöhnliche Computerhardware sein, die in der Lage ist, Informationen wie z.B. digitale Bildaufnahmen, Daten, Computerprogramme und/oder andere digitale Informationen entweder vorübergehend und/oder dauerhaft zu speichern. Der Speicher (15) kann einen flüchtigen und/oder nichtflüchtigen Speicher umfassen und kann fest eingebaut oder entfernbar sein. Beispiele für geeignete Speicher sind RAM (Random Access Memory), ROM (Read-Only Memory), eine Festplatte, ein Flash-Speicher, eine austauschbare Computerdiskette, eine optische Disc, ein Magnetband oder eine Kombination der oben genannten. Zu den optischen Discs können Compact Discs mit Nur-LeseSpeicher (CD-ROM), Compact Discs mit Lese-/Schreibfunktion (CD-R/W), DVDs, Blu-ray-Discs und ähnliche gehören.

Zusätzlich zum Speicher (15) kann die Verarbeitungseinheit (11) auch mit einer oder mehreren Schnittstellen (12, 13, 14, 17, 18) verbunden sein, um Informationen anzuzeigen, zu übertragen und/oder zu empfangen. Die Schnittstellen können eine oder mehrere Kommunikationsschnittstellen (17, 18) und/oder eine oder mehrere Benutzerschnittstellen (12, 13, 14) umfassen. Die eine oder mehrere Kommunikationsschnittstellen können so konfiguriert sein, dass sie Informationen senden und/oder empfangen, z.B. zu und/oder von einer Kamera, anderen Computern, Netzwerken, Datenspeichern oder dergleichen. Die eine oder mehrere Kommunikationsschnittstellen können so konfiguriert sein, dass sie Informationen über physische (verdrahtete) und/oder drahtlose Kommunikationsverbindungen übertragen und/oder empfangen. Die eine oder die mehreren Kommunikationsschnittstellen können eine oder mehrere Schnittstellen für die Verbindung mit einem Netzwerk enthalten, z.B. unter Verwendung von Technologien wie Mobiltelefon, Wi-Fi, Satellit, Kabel, DSL, Glasfaser und/oder dergleichen. In einigen Beispielen können die eine oder die mehreren Kommunikationsschnittstellen eine oder mehrere Nahbereichskommunikationsschnittstellen umfassen, die so konfiguriert sind, dass sie Geräte mit Nahbereichskommunikationstechnologien wie NFC, RFID, Bluetooth, Bluetooth LE, ZigBee, Infrarot (z. B. IrDA) oder Ähnlichem verbinden.

Die Benutzerschnittstellen (12, 13, 14) können eine Anzeige (14) umfassen. Eine Anzeige (14) kann so konfiguriert sein, dass sie einem Benutzer Informationen anzeigt. Geeignete Beispiele hierfür sind eine Flüssigkristallanzeige (LCD), eine Leuchtdiodenanzeige (LED), ein Plasmabildschirm (PDP) oder Ähnliches. Die Benutzereingabeschnittstelle(n) (12, 13) kann/können verdrahtet oder drahtlos sein und kann/können so konfiguriert sein, dass sie Informationen von einem Benutzer in das Computersystem (10) empfängt/empfangen, z.B. zur Verarbeitung, Speicherung und/oder Anzeige. Geeignete Beispiele für Benutzereingabeschnittstellen sind ein Mikrofon, ein Bild- oder Videoaufnahmegerät (z.B. eine Kamera), eine Tastatur oder ein Tastenfeld, ein Joystick, eine berührungsempfindliche Oberfläche (getrennt von einem Touchscreen oder darin integriert) oder ähnliches. In einigen Beispielen können die Benutzerschnittstellen eine automatische Identifikations- und Datenerfassungstechnologie (AIDC) für maschinenlesbare Informationen enthalten. Dazu können Barcodes, Radiofrequenz-Identifikation (RFID), Magnetstreifen, optische Zeichenerkennung (OCR), Karten mit integrierten Schaltkreisen (ICC) und ähnliches gehören. Die Benutzerschnittstellen können ferner eine oder mehrere Schnittstellen für die Kommunikation mit Peripheriegeräten wie Druckern und dergleichen umfassen.

Ein oder mehrere Computerprogramme (16) können im Speicher (15) gespeichert sein und von der Verarbeitungseinheit (11) ausgeführt werden, die dadurch programmiert wird, die in dieser Beschreibung beschriebenen Funktionen zu erfüllen. Das Abrufen, Laden und Ausführen von Anweisungen des Computerprogramms (16) kann sequenziell erfolgen, so dass jeweils ein Befehl abgerufen, geladen und ausgeführt wird. Das Abrufen, Laden und/oder Ausführen kann aber auch parallel erfolgen.

Das erfindungsgemäße System kann als Laptop, Notebook, Netbook, Tablet-PC und/oder Handheld-Gerät (z.B. Smartphone) ausgeführt sein. Vorzugsweise umfasst das erfindungsgemäße System eine Kamera.

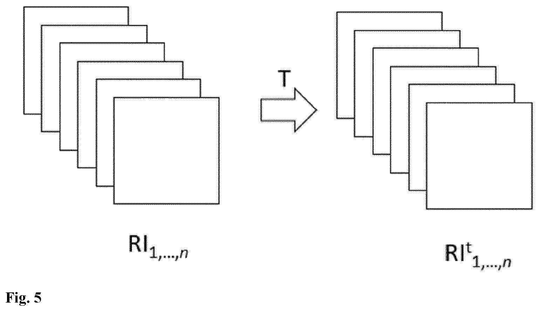

Fig. 5 zeigt beispielhaft und schematisch das Erzeugen eines Trainingsdatensatzes zum Trainieren eines Modells des maschinellen Lernens. Anhand des Trainingsdatensatzes wird das Modell des maschinellen Lernens trainiert, eine oder mehrere Transformationen von Bildaufnahmen durchzuführen.

Das Erzeugen eines Trainingsdatensatzes kann ein manueller Prozess sein, der von einem oder von mehreren Experten durchgeführt wird. Ausgangspunkt ist im vorliegenden Beispiel eine Zahl n von Referenz-Bildaufnahmen $RI_1$ bis $RI_n$, wobei $n$ eine ganze Zahl ist, die vorzugsweise größer als 100 ist. Jede Referenz-Bildaufnahme zeigt einen optischen Code, der in eine Oberfläche eines Gegenstands eingebracht ist. Vorzugsweise zeigt jede Referenz-Bildaufnahme einen optisch lesbaren Code, der in ein unterschiedliches Exemplar eines Gegenstands eingebracht ist. Bei dem Gegenstand kann es sich beispielsweise um einen Apfel handeln; in dem Fall zeigt jede Referenz-Bildaufnahme vorzugsweise einen optisch lesbaren Code in verschiedenen Apfel-Exemplaren.

Ist es stets der gleiche Referenz-Gegenstand wie z.B. ein Apfel, dann kann der Trainingsdatensatz dazu verwendet werden, ein Modell des maschinellen Lernens zu trainieren, Störungen in Bildaufnahmen von optisch lesbaren Codes, die in Äpfeln eingebracht sind, zu reduzieren und/oder zu eliminieren.

Sind es verschiedene Referenz-Gegenstände wie beispielsweise verschiedene Früchte (z.B. Äpfel und Birnen), kann der Trainingsdatensatz dazu verwendet werden, ein Modell des maschinellen Lernens zu trainieren, Störungen in Bildaufnahmen von optisch lesbaren Codes, die in verschiedenen Früchten eingebracht sind, zu reduzieren und/oder zu eliminieren. Je verschiedener (variantenreicher) die Referenz-Gegenstände sind, die in den Referenz-Bildaufnahmen abgebildet sind, desto mehr Trainingsdaten sind erforderlich, und desto vielfältiger kann das trainierte Modell des maschinellen Lernens eingesetzt werden. Ein Modell des maschinellen Lernens, das nur auf Basis von Referenz-Bildaufnahmen von Äpfeln einer definierten Sorte trainiert worden ist, wird bei einer Nutzung zum Auslesen von Codes auf Bananen weniger gute Ergebnisse erzielen als ein Modell, das auf Basis von Referenz-Bildaufnahmen von Äpfeln verschiedener Sorten und von Bananen trainiert worden ist. Der optisch lesbare Code, der in den Referenz-Bildaufnahmen abgebildet ist, kann ebenso in allen Referenz-Bildaufnahmen gleich oder verschieden sein.

Im vorliegenden Beispiel (Fig. 5) wird von mindestens einem Experten aus jeweils einer Referenz-Bildaufnahme eine transformierte Referenzbildaufnahme erzeugt. Wie in dieser Beschreibung beschrieben, können auch mehrere Referenz-Bildaufnahmen zu einer transformierten Referenz-Bildaufnahme kombiniert werden. Eine transformierte Referenz-Bildaufnahme wird dadurch erzeugt, dass die Referenz-Bildaufnahme einer oder mehreren Transformationen unterzogen wird. Welche Transformation(en) durchgeführt wird/werden, und in welcher Reihenfolge die Transformationen bei mehreren Transformationen durchgeführt werden, wird von dem mindestens einen Experten auf Basis seines Fachwissens festgelegt. Ziel der Transformation(en) ist es, aus mindestens einer Referenz-Bildaufnahme eine transformierte Referenz-Bildaufnahme zu erzeugen, in der weniger Störungen vorhanden sind und damit die Wahrscheinlichkeit des Auftretens von Dekodierfehlern reduziert ist.

Störfaktoren sind Merkmale des Gegenstands und/oder des in eine Oberfläche des Gegenstands eingebrachten optisch lesbaren Codes, die zu Störungen in der mindestens einen Bildaufnahme führen.

Derartige Störungen sind beispielsweise Verzerrungen/Verzeichnungen, Lichtreflexe, Code-Elemente mit unterschiedlichen Färbungen und/oder Größen und/oder dergleichen.

Störfaktoren und Störungen können dazu führen, dass Elemente eines optisch lesbaren Codes, so wie sie in der mindestens einen Bildaufnahme abgebildet sind, nicht erkannt oder fehlinterpretiert werden.

Störfaktoren und Störungen können dazu führen, dass Merkmale des Gegenstands, so wie er in der mindestens einen Bildaufnahme abgebildet ist, als Merkmale eines optischen Codes interpretiert werden, obwohl sie nicht Teil des optisch lesbaren Codes sind.

Mit Hilfe der vorliegenden Erfindung werden ein oder mehrere Störungen in der mindestens einen Bildaufnahme reduziert und/oder eliminiert. Dies geschieht mit Hilfe einer oder mehrerer Transformationen.

**Patentansprüche**

1. Verfahren zum Trainieren eines Modells (MLM) des maschinellen Lernens, umfassend:

   - Bereitstellen von Trainingsdaten (TD), wobei die Trainingsdaten (TD) für jeden Gegenstand einer Vielzahl von Gegenständen i) mindestens eine Referenz-Bildaufnahme (RI) von einem optischen Code, der in eine Oberfläche des Gegenstands eingebracht ist, und ii) eine transformierte Referenz-Bildaufnahme ($RI^t$) von dem optischen Code umfassen, wobei das Dekodieren des optischen Codes in der transformierten Referenz-Bildaufnahme ($RI^t$) weniger Dekodierfehler erzeugt als das Dekodieren des optischen Codes in der Referenz-Bildaufnahme (RI), wobei für jeden Gegenstand die transformierte Referenz-Bildaufnahme ($RI^t$) durch Anwenden einer oder mehrerer Transformationen auf die mindestens eine Referenz-Bildaufnahme (RI) erzeugt wurde, wobei die eine oder mehreren Transformationen den Kontrast zwischen dem optisch lesbaren Code und dem umliegenden Teil der Oberfläche erhöhen und/oder Verzerrungen/Verzeichnungen reduzieren oder eliminieren und/oder Reflexionen reduzieren oder eliminieren, wobei die Gegenstände verschiedene Exemplare eines pflanzlichen oder tierischen Erzeugnisses sind,
   - Bereitstellen eines Modells des maschinellen Lernens (MLM), wobei das Modell des maschinellen Lernens (MLM) konfiguriert ist, auf Basis mindestens einer ersten Bildaufnahme und auf Basis von Modellparametern (MP) eine zweite Bildaufnahme zu erzeugen, wobei die zweite Bildaufnahme eine transformierte erste Bildaufnahme ist,
   - Trainieren des Modells (MLM) des maschinellen Lernens, wobei das Trainieren für jeden Gegenstand der Vielzahl von Gegenständen umfasst:

     o Eingeben der mindestens einen Referenz-Bildaufnahme (RI) in das Modell (MLM) des maschinellen Lernens,
     o Empfangen einer vorhergesagten transformierten Referenz-Bildaufnahme (I*) von dem Modell (MLM) des maschinellen Lernens,
     o Berechnen einer Abweichung zwischen der transformierten Referenz-Bildaufnahme ($RI^t$) und der vorhergesagten transformierten Referenz-Bildaufnahme (I*),
     o Modifizieren der Modellparameter (MP) im Hinblick auf eine Reduzierung der Abweichung,

   - Speichern und/oder Ausgeben des trainierten Modells ($MLM^t$) des maschinellen Lernens und/oder Übermitteln des trainierten Modells ($MLM^t$) des maschinellen Lernens an ein separates Computersystem und/oder Verwenden des trainierten Modells ($MLM^t$) des maschinellen Lernens zur Erzeugung einer transformierten Bildaufnahme von mindestens einer neuen Bildaufnahme eines Gegenstands.

2. Verfahren gemäß Anspruch 1, wobei die eine oder die mehreren Transformationen so gewählt wurden, dass das Auslesen des optisch lesbaren Codes in der transformierten Referenz-Bildaufnahme ($RI^t$) zu weniger Dekodierfehlern führt als das Auslesen des optisch lesbaren Codes in der mindestens einen Referenz-Bildaufnahme (RI).

3. Verfahren gemäß Anspruch 1 oder 2, wobei die eine oder die mehreren Transformationen empirisch ermittelt wurden.

4. Verfahren gemäß einem der Ansprüche 1 bis 3, wobei das Modell (MLM) des maschinellen Lernens ein künstliches neuronales Netzwerk ist oder ein solches umfasst.

5. Verfahren gemäß einem der Ansprüche 1 bis 4, wobei der optisch lesbare Code mittels eines Lasers in die Oberfläche des Gegenstands eingebracht worden ist.

6. Verfahren gemäß einem der Ansprüche 1 bis 5, wobei der optisch lesbare Code ein Matrixcode oder ein Strichcode ist.

7. Verfahren gemäß einem der Ansprüche 1 bis 6, wobei der optisch lesbare Code alphanumerische Zeichen umfasst.

8. Computer-implementiertes Verfahren zum Dekodieren eines optisch lesbaren Codes, der in eine Oberfläche eines Gegenstands eingebracht ist:

   - Empfangen einer Bildaufnahme (I) von dem optisch lesbaren Code,
   - Zuführen der Bildaufnahme (I) einem trainierten Modell ($MLM^t$) des maschinellen Lernens, wobei das trainierte Modell ($MLM^t$) des maschinellen Lernens in einem Verfahren gemäß einem der Ansprüche 1 bis 7 trainiert wurde,
   - Empfangen einer transformierten Bildaufnahme (I*) von dem trainierten Modell ($MLM^t$) des maschinellen Lernens,
   - Dekodieren des in der transformierten Bildaufnahme (I*) abgebildeten optisch lesbaren Codes.

9. Verfahren gemäß Anspruch 8, ferner umfassend den Schritt:

   - Ausgeben des dekodierten optisch lesbaren Codes (OI) und/oder von Informationen, die mit dem dekodierten Code (OI) verknüpft sind.

10. System (10) umfassend mindestens einen Prozessor (11), wobei der Prozessor (11) konfiguriert ist,

   - eine Bildaufnahme (I) von einem optisch lesbaren Code zu empfangen, wobei der optisch lesbare Code in eine Oberfläche eines Gegenstands eingebracht ist,
   - die Bildaufnahme (I) einem trainierten Modell ($MLM^t$) des maschinellen Lernens zuzuführen, wobei das trainierte Modell ($MLM^t$) des maschinellen Lernens in einem Verfahren gemäß einem der Ansprüche 1 bis 7 trainiert worden ist,
   - von dem trainierten Modell ($MLM^t$) des maschinellen Lernens eine transformierte Bildaufnahme (I*) zu empfangen,
   - den in der transformierten Bildaufnahme (I*) abgebildeten optisch lesbaren Code zu dekodieren.

11. System (10) gemäß Anspruch 10, wobei der Prozessor (11) konfiguriert ist, den dekodierten Code (OI) oder Informationen, die mit dem dekodierten Code (OI) verknüpft sind, auszugeben.

12. Computerprogrammprodukt umfassend einen Datenträger, auf dem ein Computerprogramm (16) gespeichert ist, wobei das Computerprogramm (16) in einen Arbeitsspeicher (15) eines Computersystems (10) geladen werden kann und dort das Computersystem (10) dazu veranlasst, folgende Schritte ausführen:

   - Empfangen einer Bildaufnahme (I) von einem optisch lesbaren Code, wobei der optisch lesbare Code in eine Oberfläche eines Gegenstands eingebracht ist,
   - Zuführen der Bildaufnahme einem trainierten Modell ($MLM^t$) des maschinellen Lernens, wobei das trainierte Modell ($MLM^t$) des maschinellen Lernens in einem Verfahren gemäß einem der Ansprüche 1 bis 7 trainiert worden ist,
   - Empfangen einer transformierten Bildaufnahme (I*) von dem trainierten Modell ($MLM^t$) des maschinellen Lernens,
   - Dekodieren des in der transformierten Bildaufnahme (I*) abgebildeten optisch lesbaren Codes,
   - Ausgeben des dekodierten optisch lesbaren Codes (OI) und/oder von Informationen, die mit dem dekodierten Code (OI) verknüpft sind.

**Claims**

1. Method for training a machine learning model (MLM), comprising:

- providing training data (TD), wherein the training data (TD) for each object of a multiplicity of objects comprise i) at least one reference image recording (RI) of an optical code introduced into a surface of the object, and ii) a transformed reference image recording (RI$^t$) of the optical code, wherein decoding the optical code in the transformed reference image recording (RI$^t$) generates fewer decoding errors than decoding the optical code in the reference image recording (RI), wherein for each object the transformed reference image recording (RI$^t$) was generated by applying one or more transformations to the at least one reference image recording (RI), wherein the one or more transformations increase the contrast between the optically readable code and the surrounding part of the surface and/or reduce or eliminate distortions and/or reduce or eliminate reflections, wherein the objects are different specimens of a plant or animal product,

- providing a machine learning model (MLM), wherein the machine learning model (MLM) is configured to generate a second image recording on the basis of at least one first image recording and on the basis of model parameters (MP), wherein the second image recording is a transformed first image recording,

- training the machine learning model (MLM), wherein the training for each object of the multiplicity of objects comprises:

    o inputting the at least one reference image recording (RI) into the machine learning model (MLM),
    o receiving a predicted transformed reference image recording (I*) from the machine learning model (MLM),
    o calculating a deviation between the transformed reference image recording (RI$^t$) and the predicted transformed reference image recording (I*),
    o modifying the model parameters (MP) with regard to reducing the deviation,

- storing and/or outputting the trained machine learning model (MLM$^t$) and/or communicating the trained machine learning model (MLM$^t$) to a separate computer system and/or using the trained machine learning model (MLM$^t$) to generate a transformed image recording from at least one new image recording of an object.

2. Method according to Claim 1, wherein the one or more transformations were chosen such that reading out the optically readable code in the transformed reference image recording (RI$^t$) leads to fewer decoding errors than reading out the optically readable code in the at least one reference image recording (RI).

3. Method according to Claim 1 or **2,** wherein the one or more transformations were determined empirically.

4. Method according to any of Claims 1 to **3,** wherein the machine learning model (MLM) is an artificial neural network or comprises such a network.

5. Method according to any of Claims 1 to **4,** wherein the optically readable code has been introduced into the surface of the object by means of a laser.

6. Method according to any of Claims 1 to **5,** wherein the optically readable code is a matrix code or a barcode.

7. Method according to any of Claims 1 to 6, wherein the optically readable code comprises alphanumeric characters.

8. Computer-implemented method for decoding an optically readable code that has been introduced into a surface of an object:

    - receiving an image recording (I) from the optically readable code,
    - feeding the image recording (I) to a trained machine learning model (MLM$^t$), wherein the trained machine learning model (MLM$^t$) was trained in a method according to any of Claims 1 to 7,
    - receiving a transformed image recording (I*) from the trained machine learning model (MLM$^t$),
    - decoding the optically readable code imaged in the transformed image recording (I*).

9. Method according to Claim 8, furthermore comprising the step of:

    - outputting the decoded optically readable code (OI) and/or information linked with the decoded code (OI).

10. System (10) comprising at least one processor (11), wherein the processor (11) is configured

    - to receive an image recording (I) from an optically readable code, wherein the optically readable code has been introduced into a surface of an object,

- to feed the image recording (I) to a trained machine learning model (MLM$^t$), wherein the trained machine learning model (MLM$^t$) has been trained in a method according to any of Claims 1 to 7,
- to receive a transformed image recording (I*) from the trained machine learning model (MLM$^t$),
- to decode the optically readable code imaged in the transformed image recording (I*).

11. System (10) according to Claim 10, wherein the processor (11) is configured to output the decoded code (OI) or information linked with the decoded code (OI).

12. Computer program product comprising a data carrier on which a computer program (16) is stored, wherein the computer program (16) can be loaded into a main memory (15) of a computer system (10), where it causes the computer system (10) to execute the following steps:

- receiving an image recording (I) from an optically readable code, wherein the optically readable code has been introduced into a surface of an object,
- feeding the image recording to a trained machine learning model (MLM$^t$), wherein the trained machine learning model (MLM$^t$) has been trained in a method according to any of Claims 1 to 7,
- receiving a transformed image recording (I*) from the trained machine learning model (MLM$^t$),
- decoding the optically readable code imaged in the transformed image recording (I*),
- outputting the decoded optically readable code (OI) and/or information linked with the decoded code (OI).

**Revendications**

1. Procédé d'entraînement d'un modèle (MLM) d'apprentissage machine, consistant à :

- fournir des données d'entraînement (TD), lesdites données d'entraînement (TD) comprenant, pour chaque article d'une pluralité d'articles i) au moins une image capturée de référence (RI) d'un code optique introduit dans une surface de l'article, et ii) une image capturée de référence transformée (RI$^t$) du code optique, le décodage du code optique dans l'image capturée de référence transformée (RI$^t$) générant moins d'erreurs de décodage que le décodage du code optique dans l'image capturée de référence (RI), l'image capturée de référence transformée (RI$^t$) ayant été générée, pour chaque article, par application d'une ou plusieurs transformations à ladite au moins une image capturée de référence (RI), lesdites une ou plusieurs transformations augmentant le contraste entre le code optiquement lisible et la partie environnante de la surface et/ou réduisant ou éliminant les distorsions/déformations et/ou réduisant ou éliminant les réflexions, lesdits articles étant différents exemplaires d'un produit végétal ou animal,
- fournir un modèle d'apprentissage machine (MLM), ledit modèle d'apprentissage machine (MLM) étant configuré pour générer une seconde image capturée sur la base d'au moins une première image capturée et sur la base de paramètres de modèle (MP), la seconde image capturée étant une première image capturée transformée,
- entraîner le modèle (MLM) d'apprentissage machine, l'entraînement comprenant, pour chaque article de la pluralité d'articles :

   o fournir en entrée ladite au moins une image capturée de référence (RI) au modèle (MLM) d'apprentissage machine,
   o recevoir une image capturée de référence transformée prédite (I*) en provenance du modèle (MLM) d'apprentissage machine,
   o calculer un écart entre l'image capturée de référence transformée (RI$^t$) et l'image capturée de référence transformée prédite (I*),
   o modifier les paramètres de modèle (MP) en vue d'une réduction de l'écart,

- sauvegarder et/ou fournir en sortie le modèle (MLM$^t$) d'apprentissage machine entraîné et/ou transmettre le modèle (MLM$^t$) d'apprentissage machine entraîné à un système informatique séparé et/ou utiliser le modèle (MLM$^t$) d'apprentissage machine entraîné pour générer une image capturée transformée à partir d'au moins une nouvelle image capturée d'un article.

2. Procédé selon la revendication 1, dans lequel lesdites une ou plusieurs transformations ont été sélectionnées de telle sorte que la lecture du code optiquement lisible dans l'image capturée de référence transformée (RI$^t$) conduise à moins d'erreurs de décodage que la lecture du code optiquement lisible dans ladite au moins une image capturée de référence (RI).

**3.** Procédé selon la revendication 1 ou 2, dans lequel lesdites une ou plusieurs transformations ont été déterminées empiriquement.

**4.** Procédé selon l'une quelconque des revendications 1 à 3, dans lequel le modèle (MLM) d'apprentissage machine est ou comprend un réseau neuronal artificiel.

**5.** Procédé selon l'une quelconque des revendications 1 à 4, dans lequel le code optiquement lisible a été introduit dans la surface de l'article au moyen d'un laser.

**6.** Procédé selon l'une quelconque des revendications 1 à 5, dans lequel le code optiquement lisible est un code matriciel ou un code-barres.

**7.** Procédé selon l'une quelconque des revendications 1 à 6, dans lequel le code optiquement lisible comprend des caractères alphanumériques.

**8.** Procédé mis en œuvre par ordinateur pour décoder un code optiquement lisible qui est introduit dans une surface d'un article, consistant à :

- recevoir une image capturée (I) du code optiquement lisible,
- fournir en entrée l'image capturée (I) à un modèle (MLM$^t$) d'apprentissage machine entraîné, ledit modèle (MLM$^t$) d'apprentissage machine entraîné ayant été entraîné par un procédé selon l'une quelconque des revendications 1 à 7,
- recevoir une image capturée transformée (I*) en provenance du modèle (MLM$^t$) d'apprentissage machine entraîné,
- décoder le code optiquement lisible représenté dans l'image capturée transformée (I*).

**9.** Procédé selon la revendication 8, comprenant l'étape consistant à :

- fournir en sortie le code optiquement lisible décodé (OI) et/ou des informations combinées au code décodé (OI).

**10.** Système (10) comprenant au moins un processeur (11), ledit processeur (11) étant configuré pour

- recevoir une image capturée (I) d'un code optiquement lisible, le code optiquement lisible étant introduit dans une surface d'un article,
- fournir en entrée l'image capturée (I) à un modèle (MLM$^t$) d'apprentissage machine entraîné, ledit modèle (MLM$^t$) d'apprentissage machine entraîné ayant été entraîné par un procédé selon l'une quelconque des revendications 1 à 7,
- recevoir une image capturée transformée (I*) en provenance du modèle (MLM$^t$) d'apprentissage machine entraîné,
- décoder le code optiquement lisible représenté dans l'image capturée transformée (I*).

**11.** Système (10) selon la revendication 10, dans lequel le processeur (11) est configuré pour fournir en sortie le code décodé (OI) ou des informations combinées au code décodé (OI).

**12.** Produit de programme informatique, comprenant un support de données sur lequel est stocké un programme informatique (16), le programme informatique (16) pouvant être chargé dans une mémoire vive (15) d'un système informatique (10) et y amenant le système informatique (10) à exécuter les étapes suivantes consistant à :

- recevoir une image capturée (I) d'un code optiquement lisible, le code optiquement lisible étant introduit dans une surface d'un article,
- fournir en entrée l'image capturée à un modèle (MLM$^t$) d'apprentissage machine entraîné, ledit modèle (MLM$^t$) d'apprentissage machine entraîné ayant été entraîné par un procédé selon l'une quelconque des revendications 1 à 7,
- recevoir une image capturée transformée (I*) en provenance du modèle (MLM$^t$) d'apprentissage machine entraîné,
- décoder le code optiquement lisible représenté dans l'image capturée transformée (I*),

- fournir en sortie le code optiquement lisible décodé (OI) et/ou des informations combinées au code décodé (OI).

Fig. 1

Fig. 2

Fig. 3

Fig. 4

$$RI_{1,\dots,n}$$

$$RI^{t}_{1,\dots,n}$$

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 10140492 B1
- CN 112434544 A
- EP 3896629 A1
- EP 2281468 A1
- WO 2015117438 A1
- WO 2015117541 A1
- WO 2016118962 A1
- WO 2016118973 A1
- DE 102005019008 A
- WO 2007130968 A2
- US 5660747 A
- EP 1737306 A2
- US 10481589 B
- US 20080124433 A

### In der Beschreibung aufgeführte Nicht-Patentliteratur

- **H. PU et al.** Quick response barcode deblurring via doubly convolutional neural network. *Multimed Tools Appl*, 2019, vol. 78, 897-912
- **E. ETXEBERRIA et al.** Anatomical and Morphological Characteristics of Laser Etching Depressions for Fruit Labeling. *HortTechnology*, 2006, vol. 16
- **CHRISTOPHER CUMO**. Encyclopedia of Cultivated Plants: From Acacia to Zinnia. *ABC-CLIO*, 2013, vol. 1-3, ISBN 9781598847758
- **M.-Y. LIU** ; **J. HENRY et al.** Generative Adversarial Networks for Image and Video Synthesis: Algorithms and Applications. *arXiv:2008.02793*